# EUROPÄISCHE PATENTSCHRIFT

(11) **EP 4 119 357 B1**
(45) Veröffentlichungstag und Bekanntmachung des Hinweises auf die Patenterteilung: **27.03.2024**
(21) Anmeldenummer: 22182678.7
(22) Anmeldetag: 01.07.2022
(51) Int. Cl.: E04F 15/16, F16B 11/00, B44C 3/12, B44B 9/00, E04F 15/02, E04F 15/08, B29C 65/00, B29C 65/48, B29C 65/02

(54) **VERFAHREN ZUR HERSTELLUNG EINES VERBUNDS BESTEHEND AUS EINER ANZAHL VON FLIESEN UND EINEM TRÄGERNETZ**
METHOD FOR PRODUCING A COMPOSITE COMPRISING A NUMBER OF TILES AND A SUPPORT NETWORK
PROCÉDÉ DE FABRICATION D'UN ENSEMBLE CONSTITUÉ D'UN NOMBRE DE DALLES ET D'UN FILET PORTEUR

(30) Priorität: 13.07.2021 DE 102021118084
(43) Veröffentlichungstag der Anmeldung: 18.01.2023
(73) Patentinhaber: Mäx GmbH, 97526 Sennfeld (DE)
(72) Erfinder: Ebner, Peter, 97526 Sennfeld (DE)
(74) Vertreter: Gosdin, Carstensen & Partner Patentanwälte Partnerschaftgesellschaft mbB

(56) Entgegenhaltungen:
- EP-A1- 3 023 260
- DE-A1- 2 250 590
- DE-A1- 19 514 132
- DE-U1- 7 606 970
- US-A1- 2018 155 936
- Grimm Roland: "Mosaikfliesen: Vorder- oder rückseitig verklebt", baustoffwissen, 13. Februar 2018 (2018-02-13), Seiten 1-2, XP055945639, Gefunden im Internet: URL:https://www.baustoffwissen.de/baustoff e/baustoffknowhow/boden_und_wand/mosaikfli esen-vorderseitig-rueckseitig-verklebt-mos aiktafeln-traegermaterialien-herstellung-v erarbeitung/ [gefunden am 2022-07-25]

## Beschreibung

Die Erfindung betrifft ein Verfahren zur Herstellung eines Verbunds bestehend aus einer Anzahl von Fliesen, die mit einem Trägernetz verklebt sind.

Ein solches Verfahren ist aus der EP 3 023 260 A1 bekannt. Ähnliche Lösungen offenbaren die DE 76 06 970 U**,** die DE 22 50 590 A sowie der Beitrag "Mosaikfliesen: Vorder- oder rückseitig verklebt" in "Boden und Wand" vom 13. Februar 2018.

Für das Verlegen insbesondere von Fliesen kleiner Abmessungen (Mosaikfliesen) werden diese zwecks einfacher Verarbeitung mit einem Trägernetz (Gitternetz) verklebt. Gemäß einer diesbezüglich bekannten Vorgehensweise werden die Fliesen auf den Netzen mit Kaltkleber (Leim) verklebt.

Nachteilig ist hier, dass diese Art von Kleber wasserlöslich ist und es daher beim Einsatz der Fliesen in Bädern, d. h. bei Wassereinwirkungen im späteren Gebrauch, zu einem Ablösen der Fliesen durch Aufweichung des Kaltleims kommen kann. Weiterhin ist es nachteilig, dass zum Trocknen des Klebers ein relativ hoher Energieaufwand notwendig ist. Dies verteuert die Herstellung. Bei dem vorbekannten Verfahren wird der hergestellte Verbund zumeist durch einen Trocknungstunnel gefahren, so dass der diesbezügliche Energieaufwand hoch und die Produktionszeit entsprechend lange ist.

Nach dem Trocknen kommt es dennoch immer wieder zu Ablösungen der Fliesen vom Trägersubstrat (Netz).

Der vorliegenden Erfindung liegt die **Aufgabe** zugrunde, eine Verfahrensweise für die Herstellung des Verbunds aus Fliesen und Trägernetz vorzuschlagen, bei der eine schnelle, einfache und energiearme Herstellung möglich ist, bei der aber dennoch sichergestellt ist, dass eine gute Fixierung der Fliesen am Trägernetz vorliegt.

Die erfindungsgemäße Lösung dieser Aufgabe stellt ein Verfahren mit den Merkmalen von Hauptanspruch 1 dar.

Die Lös u n g dieser Aufgabe durch die Erfindung ist dadurch gekennzeichnet, dass das Verfahren die Schritte aufweist:
a) Ausrichten einer Anzahl Fliesen auf einer ersten ebenen Unterlage, so dass die mit dem Trägernetz zu verbindende Seite der Fliesen die erste ebene Unterlage kontaktiert;
b) Greifen der Fliesen mit dem Greifer eines Handhabungsgeräts;
c) Besprühen der mit dem Trägernetz zu verbindenden Seite der Fliesen mit einem aufgeschmolzenen Heißkleber;
d) Bereitstellen des Trägernetzes auf einer zweiten ebenen Unterlage;
e) Auflegen und/oder Aufdrücken der mit Heißkleber versehenen Fliesen auf das Trägernetz mittels des Greifers des Handhabungsgeräts;
f) Abheben der mit dem Trägernetz verbundenen Fliesen mittels des Greifers des Handhabungsgeräts;
g) Besprühen des Trägernetzes mit aufgeschmolzenem Heißkleber;
h) Auflegen und/oder Aufdrücken des Verbunds aus Fliesen und Trägernetz auf eine ebene Unterlage, insbesondere auf die zweite ebene Unterlage.

Die Fliesen haben dabei beim Aufsprühen des Heißklebers gemäß den obigen Schritten c) und g) bevorzugt eine Temperatur zwischen 30 °C und 55 °C, besonders bevorzugt zwischen 35 °C und 50 °C.

Das Ausrichten der Fliesen gemäß obigem Schritt a) erfolgt bevorzugt automatisch mittels eines zweiten Handhabungsgeräts und einer optischen Erkennungseinrichtung für die Lage der Fliesen. Hierdurch werden die Fliesen präzise ausgerichtet und mit dem gewünschten Abstand zueinander positioniert, was die Automatisierung des Prozesses begünstigt.

Das Greifen der Fliesen gemäß obigem Schritt b) und das Abheben der mit dem Trägernetz verbundenen Fliesen gemäß obigem Schritt f) erfolgt bevorzugt durch Aufbringen eines Unterdrucks durch den Greifer des Handhabungsgeräts. Demgemäß ist der Greifer so ausgestaltet, dass er durch Erzeugung eines Vakuums die einzelnen Fliesen fassen und handhaben kann. Der Heißkleber weist bei seinem Aufsprühen bevorzugt eine Temperatur zwischen 150 °C und 190 °C auf.

Heißkleber (auch Schmelzklebstoffe, Heißklebestoffe oder Hotmelt genannt) sind im Stand der Technik hinlänglich bekannt. Es sind zumeist lösungsmittelfreie sowie wasserfreie Kleber (es kann aber auch Lösungsmittel im Kleber enthalten sein), die bei Raumtemperatur im Wesentlichen fest sind, die allerdings im heißen Zustand als viskose Flüssigkeit vorliegen und auf die Klebefläche aufgetragen werden können, insbesondere aufgesprüht bzw. aufgespritzt. Beim Abkühlen verfestigt sich der Kleber und stellt die gewünschte feste Verbindung zwischen Fliesen und Trägernetz her. Es handelt sich bei dem Klebstoff um thermoplastische Polymere, die auf verschiedenen chemischen Rohstoffen basieren.

Das Besprühen der mit dem Trägernetz zu verbindenden Seite der Fliesen mit dem Heißkleber gemäß obigem Schritt c) und/oder das Besprühen des Trägernetzes mit Heißkleber gemäß obigem Schritt g) erfolgt bevorzugt, indem der Greifer des Handhabungsgeräts an einer oder an mehreren ortsfest angeordneten Düsen zum Ausbringen von Heißkleber vorbeigeführt wird.

Das Bereitstellen des Trägernetzes erfolgt bevorzugt automatisiert mittels eines Förderbandes, auf welchem zugeschnittene Teile des Trägernetzes gefördert werden. In diesem Falle ist bevorzugt vorgesehen, dass das Förderband die zweite ebene Unterlage bildet.

Gemäß obigem Schritt c) wird bevorzugt eine Menge zwischen 2 % und 10 % der Gesamtmenge Heißkleber aufgebracht, die gemäß den obigen Schritten c) und g) insgesamt aufgebracht wird.

Der Heißkleber wird dabei gemäß einer bevorzugten Ausführungsform der Erfindung bei seiner Aufbringung gemäß den obigen Schritten c) und g) als Punktmuster oder als Linienmuster aufgebracht. Insofern hat es sich bewährt, wenn lediglich ein Bereich zwischen 2 % und 10 % der gesamten Fläche der Fliesen bzw. des Trägernetzes mit Heißkleber versehen wird. Es ist insoweit völlig ausreichend, dass pro Fliese beispielsweise vier (kleine) Klebepunkte vorgesehen werden, die den stoffschlüssigen Verbund zwischen Fliese und Trägernetz herstellen.

Durch die vorgeschlagene Vorgehensweise wird ein maschinelles Verkleben der Fliesen mit dem Trägernetz möglich, wobei ein Heißkleber bzw. Schmelzklebstoff zum Einsatz kommt.

In vorteilhafter Weise können die Fliesen bei Produktion durch die vorgeschlagene Verfahrensweise nicht mehr durch Wasser abgelöst werden, sie sind sicher mit dem Trägernetz verbunden, so dass auch bei einer späteren Durchfeuchtung des Bereichs, in dem die Fliesen verlegt sind, ein fester Verbund gewährleistet bleibt.

Ferner ist der Energieaufwand, der zum Verkleben mit Schmelzklebstoff benötigt wird, nur ein Bruchteil dessen, wie er bei der vorbekannten Verklebung durch Kaltkleber erforderlich ist.

Weiterhin ist durch die automatische Produktion die Prozessgeschwindigkeit und die Prozesssicherheit bei der Verarbeitung und Herstellung des Verbunds aus Fliesen und Trägernetz sehr viel höher als bei herkömmlichen Verfahren.

Der zum Einsatz kommende Schmelzklebstoff kann sehr schnell aushärten, so dass bereits nach wenigen Sekunden der fertig hergestellte Verbund zur weiteren Handhabung (Verpackung) zur Verfügung steht.

In der Zeichnung ist ein Ausführungsbeispiel der Erfindung dargestellt. Es zeigen:
- Fig. 1: schematisch in der Draufsicht einen Verbund bestehend aus einer Anzahl an Fliesen und einem Trägernetz, also das fertige herzustellende Produkt,
- Fig. 2: schematisch in der Seitenansicht die auf einer Unterlage ausgerichtet platzierten Fliesen, die von einem Handhabungsgerät gegriffen werden,
- Fig. 3: schematisch in der Seitenansicht die gegriffenen Fliesen, die mittels einer Düse an der Seite mit Heißklebstoff versehen werden, an der das Trägernetz angebracht werden soll,
- Fig. 4: schematisch in der Seitenansicht das Aufdrücken der mit Heißklebstoff versehenen Fliesen auf das Trägernetz, welches auf einer Unterlage platziert ist,
- Fig. 5: schematisch in der Seitenansicht die gegriffenen Fliesen samt Trägernetz, wobei das Trägernetz mittels der Düse mit Heißklebstoff versehen wird, und
- Fig. 6: schematisch in der Seitenansicht den fertig hergestellten Verbund, der auf der Unterlage zum Abtransport bereitliegt.

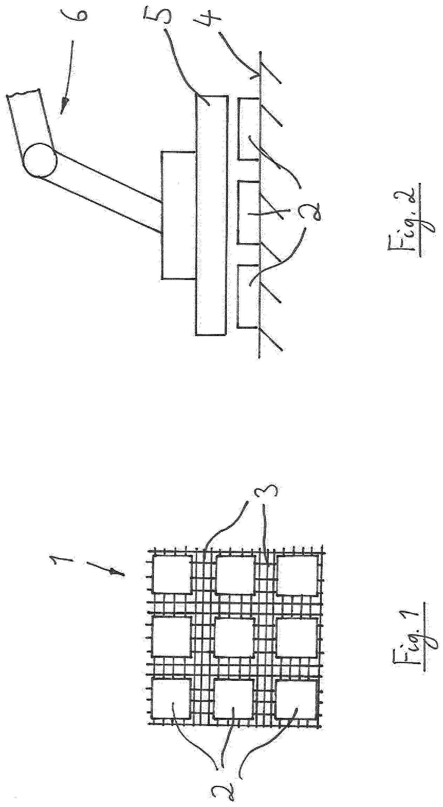

In Figur 1 ist zunächst das fertig hergestellte Produkt dargestellt, nämlich ein Verbund 1 bestehend aus einer Anzahl Fliesen 2 und einem Trägernetz 3, welches die Fliesen 2 miteinander verbindet. Die Ausrichtung und Beabstandung der Fliesen 2 untereinander entspricht dem späteren Verwendungszweck (und ist bezüglich der Beabstandung in Figur 1 übertrieben dargestellt).

Das beschriebene Verfahren dient dazu, den Verbund 1 schnell und mit geringem Energieaufwand und somit ökonomisch und ökologisch herzustellen.

In einem ersten Arbeitsschritt erfolgt das Ausrichten der Fliesen 2 auf einer ersten Unterlage 4, wie es in Figur 2 angedeutet ist. Der hier bereits dargestellte Greifer 5 eines Handhabungsgeräts 6 befindet sich beim Ausrichten und Platzieren der Fliesen noch nicht in der dargestellten Position. Vielmehr kann mit einem zweiten (nicht dargestellten) Handhabungsgerät und einer (nicht dargestellten) optischen Erkennungseinrichtung die Ausrichtung der Fliesen in der gewünschten Weise automatisiert erfolgen.

Erst wenn dies geschehen ist wird gemäß Figur 2 der Greifer 5 herangefahren, um die Fliesen 2 mit diesem zu greifen. Hierfür dient ein Vakuum, mit dem die einzelnen Fliesen 2 temporär am Greifer 5 fixiert werden.

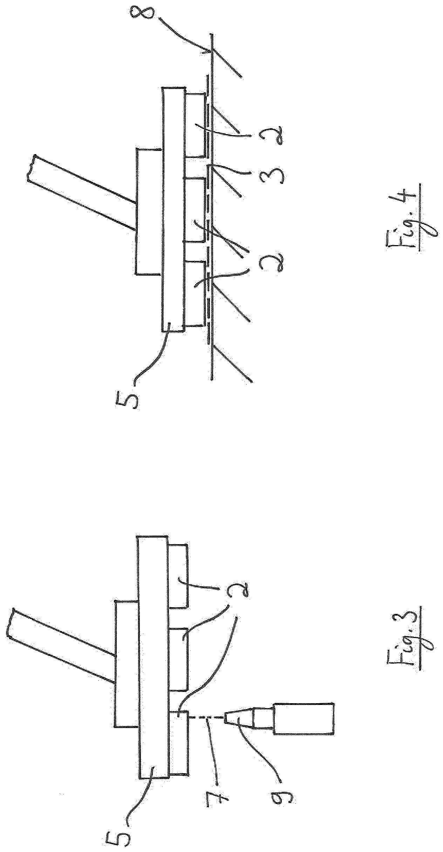

Die gegriffenen Fliesen 2 werden vom Greifer 5 dann an eine Düse 9 herangeführt, mit der ein Heißkleber 7 ausgebracht werden kann. Dies ist in Figur 3 dargestellt. Die Düse 9 ist dabei ortsfest, so dass der Greifer 5 an der Düse 9 so entlang geführt wird, dass die mit dem Trägernetz 3 zu verklebenden Seite aller Fliesen 2 mit Schmelzklebstoff versehen wird. Dabei ist es ausreichend, nur eine geringe Menge des insgesamt aufzubringenden Heißklebers aufzuspritzen. Als Orientierungsgröße gelten 5 % der Gesamtmenge des Heißklebers.

Zwischenzeitlich wurde, was in Figur 4 illustriert ist, ein Abschnitt des Trägernetzes 3, der auf die gewünschte Größe zugeschnitten wurde, auf einer zweiten ebenen Unterlage 8 bereitgestellt. Die mit Schmelzklebstoff versehenen Fliesen 2 werden nun mittels des Greifers 5 auf die Oberseite des Trägernetzes 3 aufgesetzt und aufgedrückt, so dass der bereits aufgebrachte Heißkleber für einen ersten, vorläufigen Verbund zwischen Fliesen 2 und Trägernetz 3 sorgt.

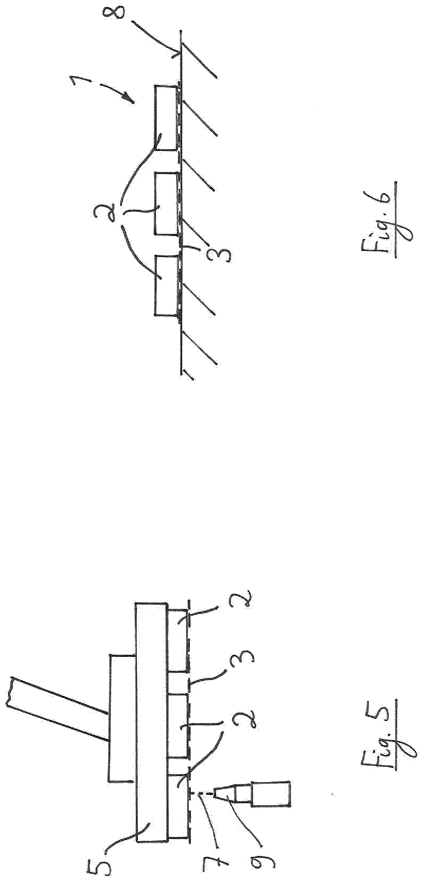

Wie es aus Figur 5 hervorgeht, wird nun der Verbund aus Fliesen 2 und Trägernetz 3 vom Greifer 5 erneut an die Düse 9 herangefahren und von dieser der Großteil des Schmelzklebstoff aufgespritzt, so dass der endgültige stoffschlüssige Verbund zwischen den einzelnen Fliesen 2 und dem Trägernetz 3 hergestellt wird. Bevorzugt wird eine Anzahl von Befestigungspunkten durch den Schmelzklebstoff hergestellt, beispielsweise vier Befestigungspunkte pro Fliese 2. Es kann aber beispielsweise auch ein Linienmuster bei der Aufbringung des Schmelzklebstoffs vorgesehen werden.

Der somit mit der gesamten Menge an Schmelzklebstoff versehene Verbund wird nun, wie es in Figur 6 dargestellt ist, zur zweiten ebenen Unterlage 8 geführt und vom Greifer 5 nochmals auf diese aufgedrückt oder aufgepresst. Binnen kurzer Zeit (ca. 1 bis 5 Sekunden) entsteht so die endgültige feste Verbindung zwischen den Fliesen 2 und den Trägernetz 3.

Die zweite ebene Unterlage 8 besteht dabei bevorzugt aus einem Silikonsubstrat, so dass bei der erläuterten Manipulation kein Klebeverbund mit der Unterlage hergestellt wird. Hierbei ist insbesondere an ein Förderband gedacht, welches aus besagtem Silikonsubstrat besteht und auf welchem die zugeschnittenen Abschnitte des Trägernetzes 3 aufgelegt und gefördert werden.

Das Aufwärmen der Fliesen erfolgt bevorzugt auf der ersten ebenen Unterlage 4, die auch als Förderband ausgebildet sein kann. Demgemäß erfolgt (bei noch stehendem Förderband) die Ausrichtung der Fliesen mit dem erwähnten (nicht dargestellten) zweiten Handhabungsgerät und anschließend ein Fördern der ausgerichteten Fliesen an die Stelle, wo der Greifer 5 (gemäß Figur 2) die Fliesen von der ersten ebenen Unterlage 4 abhebt.

### Bezugszeichenliste:

- 1: Verbund (Fliesen plus Trägernetz)
- 2: Fliese
- 3: Trägernetz
- 4: erste ebene Unterlage
- 5: Greifer
- 6: Handhabungsgerät
- 7: Heißkleber
- 8: zweite ebene Unterlage
- 9: Düse

## Patentansprüche

1. Verfahren zur Herstellung eines Verbunds (1) bestehend aus einer Anzahl von Fliesen (2), die mit einem Trägernetz (3) verklebt sind,
**dadurch gekennzeichnet,**
**dass** das Verfahren die Schritte aufweist:
a) Ausrichten einer Anzahl Fliesen (2) auf einer ersten ebenen Unterlage (4), so dass die mit dem Trägernetz (3) zu verbindende Seite der Fliesen (1) die erste ebene Unterlage (4) kontaktiert;
b) Greifen der Fliesen (2) mit dem Greifer (5) eines Handhabungsgeräts (6);
c) Besprühen der mit dem Trägernetz (3) zu verbindenden Seite der Fliesen (1) mit einem aufgeschmolzenen Heißkleber (7);
d) Bereitstellen des Trägernetzes (3) auf einer zweiten ebenen Unterlage (8);
e) Auflegen und/oder Aufdrücken der mit Heißkleber (7) versehenen Fliesen (2) auf das Trägernetz (3) mittels des Greifers (5) des Handhabungsgeräts (6);
f) Abheben der mit dem Trägernetz (3) verbundenen Fliesen (1) mittels des Greifers (5) des Handhabungsgeräts (6);
g) Besprühen des Trägernetzes (3) mit aufgeschmolzenem Heißkleber (7);
h) Auflegen und/oder Aufdrücken des Verbunds (1) aus Fliesen (2) und Trägernetz (3) auf eine ebene Unterlage, insbesondere auf die zweite ebene Unterlage (8).

2. Verfahren nach Anspruch 1, **dadurch gekennzeichnet, dass** die Fliesen (2) beim Aufsprühen des Heißklebers (7) gemäß den Schritten c) und g) von Anspruch 1 eine Temperatur zwischen 30 °C und 55 °C haben, vorzugsweise zwischen 35 °C und 50 °C.

3. Verfahren nach Anspruch 1 oder 2, **dadurch gekennzeichnet, dass** das Ausrichten der Fliesen (2) gemäß Schritt a) von Anspruch 1 automatisch mittels eines zweiten Handhabungsgeräts und einer optischen Erkennungseinrichtung für die Lage der Fliesen (2) erfolgt.

4. Verfahren nach einem der Ansprüche 1 bis 3, **dadurch gekennzeichnet, dass** das Greifen der Fliesen (2) gemäß Schritt b) von Anspruch 1 und das Abheben der mit dem Trägernetz (3) verbundenen Fliesen (1) gemäß Schritt f) von Anspruch 1 durch Aufbringen eines Unterdrucks durch den Greifer (5) des Handhabungsgeräts (6) erfolgt.

5. Verfahren nach einem der Ansprüche 1 bis 4, **dadurch gekennzeichnet, dass** der Heißkleber (7) bei seinem Aufsprühen eine Temperatur zwischen 150 °C und 190 °C aufweist.

6. Verfahren nach einem der Ansprüche 1 bis 5, **dadurch gekennzeichnet, dass** das Besprühen der mit dem Trägernetz (3) zu verbindenden Seite der Fliesen (1) mit dem Heißkleber (7) gemäß Schritt c) von Anspruch 1 und/oder das Besprühen des Trägernetzes (3) mit Heißkleber (7) gemäß Schritt g) von Anspruch 1 erfolgt, indem der Greifer (5) des Handhabungsgeräts (6) an einer oder an mehreren ortsfest angeordneten Düsen (9) zum Ausbringen von Heißkleber (7) vorbeigeführt wird.

7. Verfahren nach einem der Ansprüche 1 bis 6, **dadurch gekennzeichnet, dass** das Bereitstellen des Trägernetzes (3) automatisiert mittels eines Förderbandes erfolgt, auf welchem zugeschnittene Teile des Trägernetzes (3) gefördert werden.

8. Verfahren nach Anspruch 7, **dadurch gekennzeichnet, dass** das Förderband die zweite ebene Unterlage (8) bildet.

9. Verfahren nach einem der Ansprüche 1 bis 8, **dadurch gekennzeichnet, dass** gemäß Schritt c) von Anspruch 1 eine Menge zwischen 2 % und 10 % der Gesamtmenge Heißkleber (7) aufgebracht wird, die gemäß den Schritten c) und g) von Anspruch 1 aufgebracht wird.

10. Verfahren nach einem der Ansprüche 1 bis 9, **dadurch gekennzeichnet, dass** der Heißkleber (7) bei seiner Aufbringung gemäß den Schritten c) und g) von Anspruch 1 als Punktmuster oder als Linienmuster aufgebracht wird.

## Claims

1. Method for producing a composite (1) consisting of a number of tiles (2) which are bonded to a support net (3),
**characterised in**
**that** the method comprises the steps of:
a) Aligning a number of tiles (2) on a first flat base (4) so that the side of the tiles (1) to be connected to the support net (3) makes contact with the first flat base (4);
b) Gripping the tiles (2) with the gripper (5) of a handling device (6);
c) Spraying the side of the tiles (1) to be connected to the support net (3) with a melted hot-melt adhesive (7);
d) Providing the support net (3) on a second flat base (8);
e) Placing and/or pressing the tiles (2) provided with hot-melt adhesive (7) onto the support net (3) by means of the gripper (5) of the handling device (6);
f) Lifting the tiles (1) connected to the support net (3) by means of the gripper (5) of the handling device (6);
g) Spraying the support net (3) with melted hot-melt adhesive (7);
h) Laying and/or pressing the composite (1) of tiles (2) and support net (3) onto a flat base, in particular onto the second flat base (8).

2. Method according to claim 1, **characterised in that** the tiles (2) have a temperature of between 30 °C and 55 °C, preferably between 35 °C and 50 °C, when the hot-melt adhesive (7) is sprayed on in accordance with steps c) and g) of claim 1.

3. Method according to claim 1 or 2, **characterised in that** the alignment of the tiles (2) according to step a) of claim 1 is carried out automatically by means of a second handling device and an optical detection device for the position of the tiles (2).

4. Method according to one of claims 1 to 3, **characterised in that** the gripping of the tiles (2) according to step b) of claim 1 and the lifting of the tiles (1) connected to the carrier net (3) according to step f) of claim 1 is carried out by applying a negative pressure by the gripper (5) of the handling device (6).

5. Method according to one of claims 1 to 4, **characterised in that** the hot-melt adhesive (7) has a temperature of between 150 °C and 190 °C when it is sprayed on.

6. Method according to one of claims 1 to 5, **characterised in that** the spraying of the side of the tiles (1) to be connected to the support net (3) with the hot-melt adhesive (7) according to step c) of claim 1 and/or the spraying of the support net (3) with hot-melt adhesive (7) according to step g) of claim 1 is carried out by guiding the gripper (5) of the handling device (6) past one or more fixedly arranged nozzles (9) for applying hot-melt adhesive (7).

7. Method according to one of claims 1 to 6, **characterised in that** the support net (3) is provided automatically by means of a conveyor belt on which cut parts of the support net (3) are conveyed.

8. Method according to claim 7, **characterised in that** the conveyor belt forms the second flat base (8).

9. Method according to one of claims 1 to 8, **characterised in that**, according to step c) of claim 1, an amount of between 2 % and 10 % of the total amount of hot melt adhesive (7) is applied, which is applied according to steps c) and g) of claim 1.

10. Method according to one of claims 1 to 9, **characterised in that** the hot-melt adhesive (7) is applied as a dot pattern or as a line pattern during its application according to steps c) and g) of claim 1.

## Revendications

1. Procédé de fabrication d'un composite (1) constitué d'un nombre de dalles (2) collées à un filet porteur (3), **caractérisé en ce que**
le procédé présente les étapes suivantes :
a) l'orientation d'un nombre de dalles (2) sur un premier substrat plan (4), de telle sorte que le côté des dalles (1) à relier au filet porteur (3) soit en contact avec le premier substrat plan (4) ;
b) la saisie des dalles (2) avec le dispositif de préhension (5) d'un appareil de manipulation (6) ;
c) la pulvérisation d'un adhésif thermofusible fondu (7) sur le côté des dalles (1) à relier au filet porteur (3) ;
d) la fourniture du filet porteur (3) sur un deuxième substrat plan (8) ;
e) la pose et/ou la pression des dalles (2) pourvues d'adhésif thermofusible (7) sur le filet porteur (3) au moyen du dispositif de préhension (5) de l'appareil de manipulation (6) ;
f) le soulèvement des dalles (1) reliées au filet porteur (3) au moyen du dispositif de préhension (5) de l'appareil de manipulation (6) ;
g) la pulvérisation d'adhésif thermofusible fondu (7) sur le filet porteur (3) ;
h) la pose et/ou la pression du composite (1) de dalles (2) et filet porteur (3) sur un substrat plan, notamment sur le deuxième substrat plan (8).

2. Procédé selon la revendication 1, **caractérisé en ce que** les dalles (2) ont une température comprise entre 30 °C et 55 °C, de préférence entre 35 °C et 50 °C, lors de la pulvérisation de l'adhésif thermofusible (7) conformément aux étapes c) et g) de la revendication 1.

3. Procédé selon la revendication 1 ou 2, **caractérisé en ce que** l'orientation des dalles (2) conformément à l'étape a) de la revendication 1 est effectuée automatiquement au moyen d'un deuxième appareil de manipulation et d'un système de détection optique de la position des dalles (2).

4. Procédé selon l'une quelconque des revendications 1 à 3, **caractérisé en ce que** la saisie des dalles (2) conformément à l'étape b) de la revendication 1 et le soulèvement des dalles (1) reliées au filet porteur (3) conformément à l'étape f) de la revendication 1 sont effectués par application d'une dépression par le dispositif de préhension (5) de l'appareil de manipulation (6).

5. Procédé selon l'une quelconque des revendications 1 à 4, **caractérisé en ce que** l'adhésif thermofusible (7) présente une température comprise entre 150 °C et 190 °C lors de sa pulvérisation.

6. Procédé selon l'une quelconque des revendications 1 à 5, **caractérisé en ce que** la pulvérisation de l'adhésif thermofusible (7) sur le côté des dalles (1) à relier au filet porteur (3) conformément à l'étape c) de la revendication 1 et/ou la pulvérisation de l'adhésif thermofusible (7) sur le filet porteur (3) conformément à l'étape g) de la revendication 1 sont effectuées en faisant passer le dispositif de préhension (5) de l'appareil de manipulation (6) devant une ou plusieurs buses (9) agencées de manière fixe pour le déchargement d'adhésif thermofusible (7).

7. Procédé selon l'une quelconque des revendications 1 à 6, **caractérisé en ce que** la fourniture du filet porteur (3) est effectuée de manière automatisée au moyen d'une bande transporteuse sur laquelle sont acheminées des pièces découpées du filet porteur (3).

8. Procédé selon la revendication 7, **caractérisé en ce que** la bande transporteuse forme le deuxième substrat plan (8).

9. Procédé selon l'une quelconque des revendications 1 à 8, **caractérisé en ce que**, conformément à l'étape c) de la revendication 1, on applique une quantité comprise entre 2 % et 10 % de la quantité totale d'adhésif thermofusible (7) appliquée conformément aux étapes c) et g) de la revendication 1.

10. Procédé selon l'une quelconque des revendications 1 à 9, **caractérisé en ce que** l'adhésif thermofusible (7) est appliqué sous forme de motif ponctuel ou sous forme de motif linéaire lors de son application conformément aux étapes c) et g) de la revendication 1.
